# EUROPEAN PATENT APPLICATION

(11) **EP 2 322 382 A1**
(43) Date of publication of application: **18.05.2011**
(21) Application number: 09014298.5
(22) Date of filing: 16.11.2009
(51) Int. Cl.: B60R 9/055, E05B 17/00, E05B 63/20, E05C 9/02

(54) **Locking system for cases and vehicle roof boxes**

(71) Applicant: Zadi S.p.A., 41012 Carpi (Modena) (IT)
(72) Inventor: Ansaloni, Massimiliano, 41015 Nonantola Modena (IT); Zagaglia, Devis, 41012 Carpi Modena (IT)
(74) Representative: Methling, Frank-Oliver

(57) **Abstract**

The invention relates to a locking system for cases, in particular for vehicle roof boxes or the like, the case having a bottom part (15) and a hinged lid part (16), with one or more hooks (11) mounted on one part that can be engaged by movable closing means (12) mounted on the opposite part of the case, whereas there is at least one automatic releasing mechanism pushing against one or more hooks (11) towards the opening direction and lifting the hinged lid part (16) from the bottom part (15).

## Description

The invention relates to a Locking system for cases, in particular for vehicle roof boxes or the like, the case having a bottom part and a hinged lid part, with one or more hooks mounted on one part that can be engaged by movable closing means mounted on the opposite part of the case.

Such locking systems are known. DE 42 16 926 A1 discloses a locking system with several hooks mounted on the upper cover of a case which are engaged by several closing bolts of the lower part of the case, whereas the bolts are moved by a locking member which actuated by a key.

To open such a case it is necessary to use the first hand to turn the key to move the locking member and to release to bolts and to raise the cover with the second hand. A one-hand operation is not possible.

In view of this disadvantage it is an object of the invention to improve said locking systems and to realize a system which allows a one-hand operation of such cases like vehicle roof boxes or the like.

This object is solved by the features of independent claims 1 and 8. Preferred embodiments of the invention are subject of the dependent claims.

According to the invention, in particular, there is provided a locking system for cases, in particular for vehicle roof boxes or the like, the case having a bottom part and a hinged lid part, with one or more hooks mounted on one part that can be engaged by movable closing means mounted on the opposite part of the case, whereas there is at least one releasing mechanism pushing against one or more hooks towards the opening direction and lifting the hinged lid part from the bottom part.

The release mechanism provides a force towards the opening direction of the lid which results in a lifting of the lid. This results in a small opening of some millimetres or centimetres and avoids the lid falling back in the closed position and an engaging of the closing bolts when the key is released. Usually there are springs for holding the lid of a vehicle roof box in an opened position, but due to angle and the pivot of said springs, there is no force towards the opening direction when the lid is lying of the bottom part. For the right working of said springs for holding the lid it is necessary that the opening angle between the lid and the bottom is larger than only some degrees.

A preferred employment of the invention is as a locking system of a vehicle roof box, but is not limited to this. Alternatively the invention can be used for other applications as generic trunks and all types of cases.

In a preferred embodiment the releasing mechanism comprises at least one spring pushing one hook towards the opening direction, each hook pushed by one spring towards the opening direction respectively.

In the case that there are more than one hook mounted it is possible that at least one of the hooks or some elected hooks or all of the hooks are pushed by a spring towards the opening direction of the lid.

Further preferably, the movable closing means engaging the hooks are driven by one sliding rod, the sliding rod actuated over a cam by a central cylinder lock with key.

According to a further preferred embodiment, there is at least one protrusion holding the closing means and/or a sliding rod carrying the closing means in the opened position as long as the hooks are released.

Due to this protrusion holding the rod in the opened position as long as the hook(s) is/are not brought back into the closing position it is avoided that the lid is twisted and/or damaged.

In a preferred embodiment of the invention the hooks are mounted on the hinged lid part whereas the movable closing means are mounted on the bottom part. This makes it easier to charge and discharge the cases, even if it is used as a vehicle roof box and avoid injuries.

According to a further preferred embodiment, the system comprises a mechanism automatically moving the closing means in the closing position engaging with the hooks, when the hooks are moved in the closing position. This feature allows a one-hand operation to close the case.

Preferably the mechanism automatically moving the closing means in the closing position engaging with the hooks comprises at least one helical spring pushing a sliding rod which comprises the closing means.

According to the invention, in particular, there is further provided a vehicle roof box comprising a locking system as described.

The main features of the invention are therefore accordingly the following: Central locking: by operating the central lock (housing, barrel and key), it is possible to unlock, all at once, the several locking points (2 or 3) and open the system. Using more than only one locking point, each comprising a hook and closing means engaging the hook, makes the system safer and more robust.

Click-opening: after unlocking the system (by rotating clockwise the key), the upper-lid up heaves of e.g. approximately 14 mm automatically under the action of the spring loaded pins on the upper hooks; that pins are integrated in the locking system.

Click-shut: to fasten the roof box, simply press on the top lid without operating the lock. The key automatically returns in lock position by performing a rotation anticlockwise.

Safety shut: the click shut works automatically only when all the locking points are in the right position to ensure the fastening of the system (all the upper hooks are positioned in the corresponding housing on the bottom part). If only one hook is out of its own housing, the click shut does not work, and it is not possible to close the system manually or to remove the key, due to the fact that the protrusion integrated in the pin for blocking the rod is still in touch with the wall in the appendix.

Lock with key: the system is preferably actuated by a cylinder lock with key. It is possible to extract the key only in the vertical position (0°), hence, only if the system is locked and in closing position. For opening the system just insert and rotate clockwise the key of approx. 45°. After the rotation, the cylinder lock is blocked in opening position and the extraction of the key is not allowed until the system will be newly closed.

These and other objects, features and advantages of the present invention will become more apparent from reading of the following detailed description of preferred embodiments and accompanying drawings.
- Fig. 1-5: show the locking system without external casing in different relative positions during operation;
- Fig. 6: shows the inner portion of the external casing;
- Fig. 7: shows an explosion figure of the locking system;
- Fig. 8: shows the mounted locking system without external casing;
- Fig. 9: shows of vehicle roof box comprising the locking system of figures 1-8;
- Fig. 10: shows another view of the vehicle roof box of figure 9.

According to the figures the locking system is explained herein after. Identical features are referenced with identical numbers in the different figures.

The locking system comprises a metal sliding rod 1 with integrated appendixes 12, where is connected bars available in different lengths that, acting on the central lock, activates all at once the several locking points.

One/two/three or more brackets 2 to support the rod on the bottom part and to contain the spring mechanisms. Each bracket 2 has a cover 8, only one has the key 21 for open the system, the other are command by the bracket with the key 21 with the bars 1 connected.

The mechanism for the automatic return of the rod (click-shut) is made by an horizontal helical spring 3 and a pin 4 that drives the spring 3.

The mechanism for the click-open of the upper-lid 16 is constituted by a vertical spring 5 and one pin 6, i.e. automatically driven by the vertical spring 5. The pin 6 pushes on the hooks 11 when the key 21 is turned in open position. The system comprises one mechanism for each bracket.

A protrusion 7 is integrated in the pin 6 for blocking the rod 1 in the open position after the lid heave (one for each bracket).

A cylinder lock 9 with key 21 (only in the central bracket if three locking points, or lateral if two locking points) for actuating the rod 1.

A cam 10 (only in the bracket with lock 9 and key 21) is connected with the cylinder lock 9 to operate the rod 1 by means of an appendix 12.

One, two, three or more hooks 11 are fixed on the upper-lid 16. The appendixes 12 are integrated in the metal sliding rod 1, for the blocking of all the hooks 11 and the for the actuation of the rod 1 by the cam/lever 10, that, during the rotation of the cam 10 it pushes the appendix 12 (by touching the area of 12a) in the open position of the system. The brackets/units 2 are connected by bars 13 fixed by screws in the hole 14.

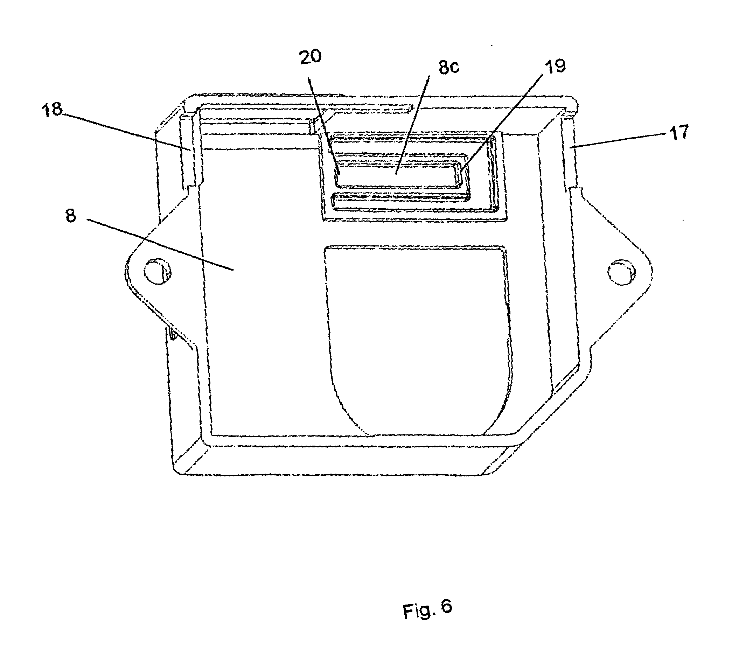

Further there is an external case 8 for covering the bracket and all the components as shown in figure 6. In additional the cover 8 has the function to guide the metal sliding rod 1 in horizontal direction by the holes 17, 18, where the rod 1 could slide free. In additional another guide 8c is done with a special hole, where the square pin 12c of the appendixes 12 is free to make the horizontal stroke until to reach the two stop positions 19, that is in the same stroke of 12a, and another stop position 20 that assures the stop in zero position of the key 21.

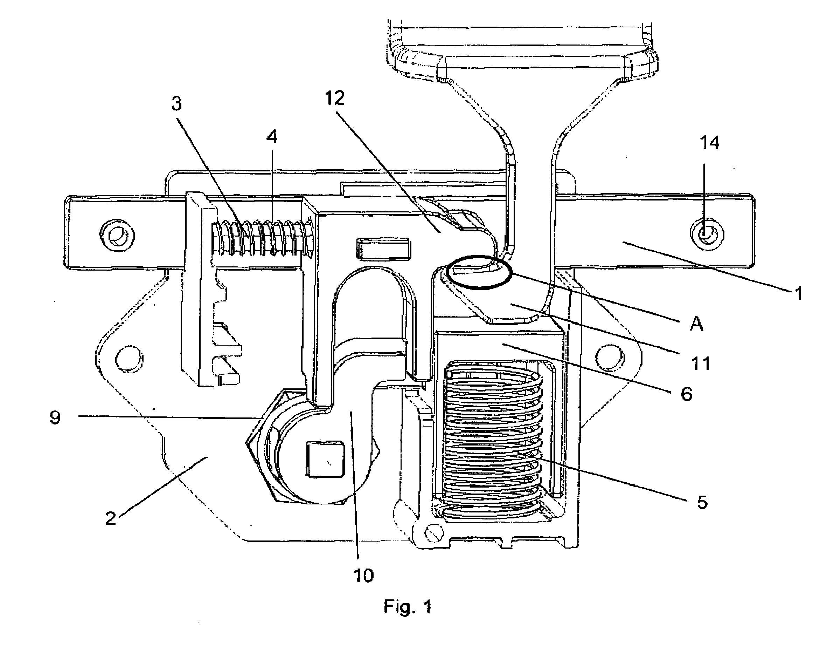

Referring to figures 1 to 5 the opening mechanism is described herein after. Figures 1 to 5 show the view onto the central bracket without cover of a total of three brackets which are positioned equidistantly.

Figure 1 shows the system is in close position. The hooks 11 are engaged in the area "A" of the appendix 12.

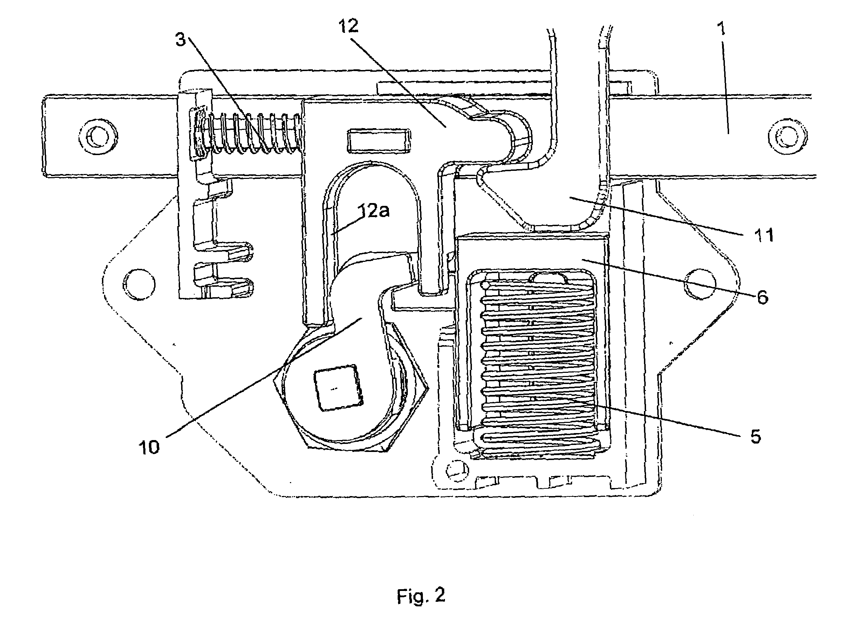

To release the locking system and to open the case the key 21 is inserted into the cylinder lock 9, the key 21 is starting to turn. The cam 10 is connected with the cylinder lock 9 and starts to move the appendix 12 and compresses the horizontal spring 3 (figure 2).

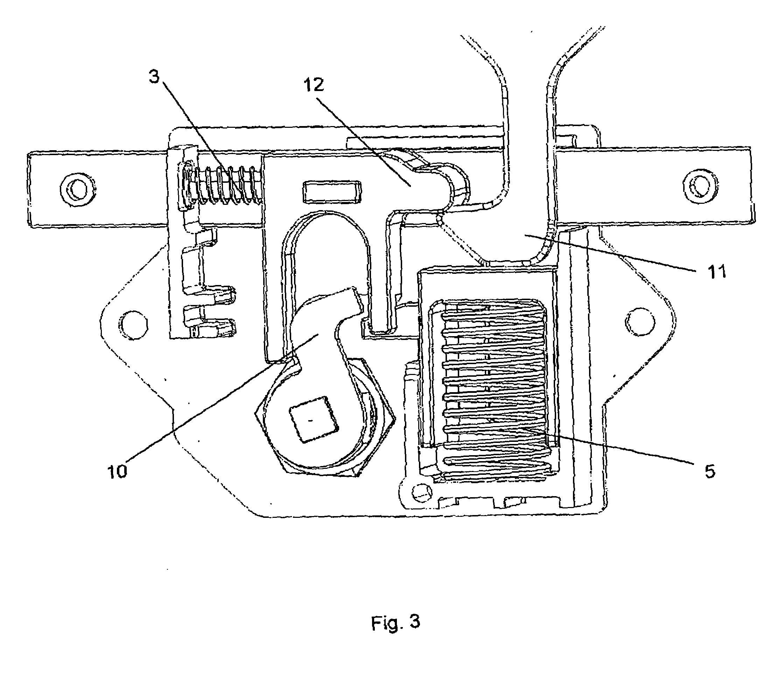

The key 21 is continuing to turn. The cam 10 is connected with the cylinder lock 9 continuing to move the appendix 12 and compresses the horizontal spring 3. The pin 6 is still in the same lower position, as shown in figure 3.

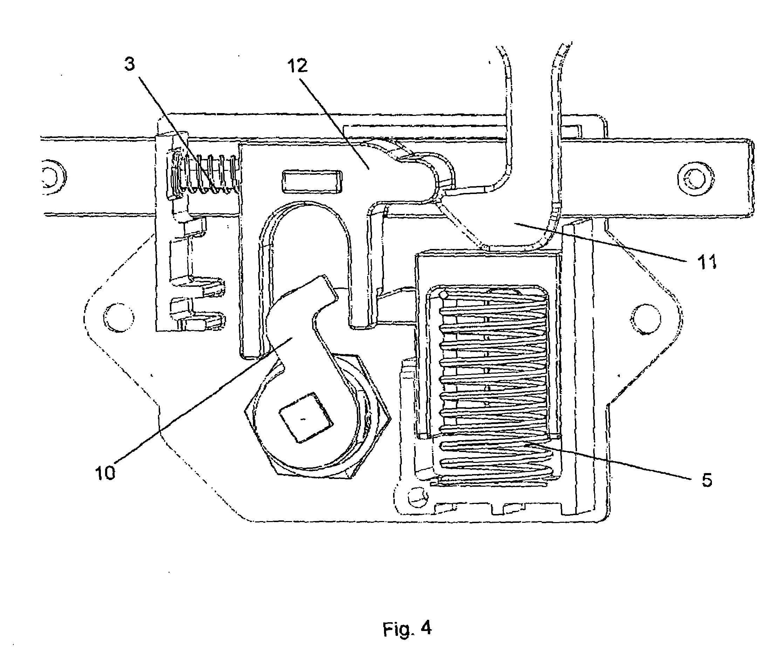

The key 21 is continuing to turn. The cam 10 connected with the cylinder lock 9 is further continuing to move the appendix 12 and compress the horizontal spring 3. The pin 6 starts to came up due to the action of the vertical spring 5, and the hook 11 start to leave the contact area "A" with the appendix 12. In addition, the protrusion 7 integrated in the pin 6 start to reach the blocking position of the metal sliding rod 1 by which all of the appendixes 12 are driven and pass trough the own cut of the appendix 12, as it is shown in figure 4.

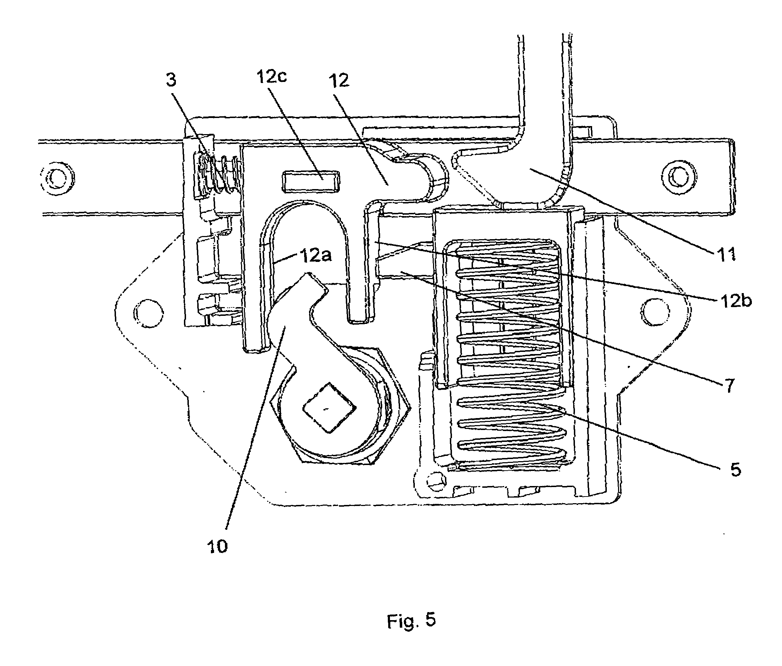

According to figure 5 the key 21 as well as the cylinder lock 9 is arrived in the stop position after approx. 45° turned. In this position the slider carrying the appendix 12 is moved backwards against the stopper on which the horizontal spring 3 is mounted. The pin 6 comes up under to the action of the vertical helical spring 5 and permit the stroke of 14mm of the upper case of the roof box with a automatic click-opening. The hooks 11 have left the area "A" completely. In addition, the protrusion 7 integrated in the pin 6 has reached the blocking position of the metal sliding rod 1. Now the roof box is open, it is not possible to remove the key 21.

The closing mechanism of the locking system is described herein after. Pulling down the upper-lid, each hook 11 goes in the corresponding housing of the bracket 2 on the lower case, pushing down the pin 6, removing the protrusion 7 from the blocking position and compressing the vertical spring 5. After a sufficient stroke, the protrusion 7 loses the contact with the wall in the appendix 12b, and the rod 1 ,where are connected the other bars 13, is free to slide under the push of the horizontal spring 3, fastening the hooks 11.

If one protrusion 7 does not lose the own wall in the appendix 12b, the complete system does not move in closing position. This means that if one hook it's not correctly closed, it is not possible to close the complete system

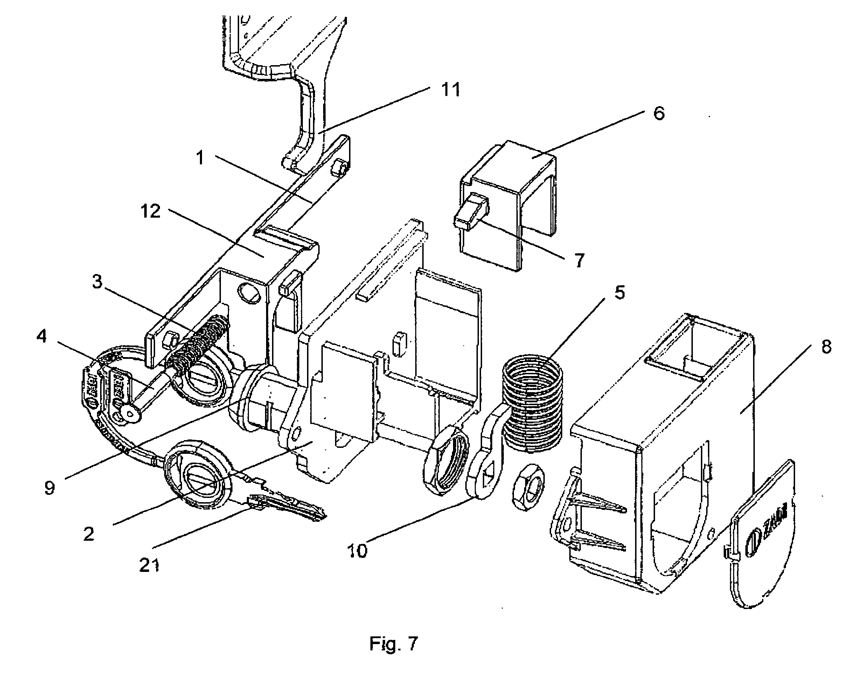

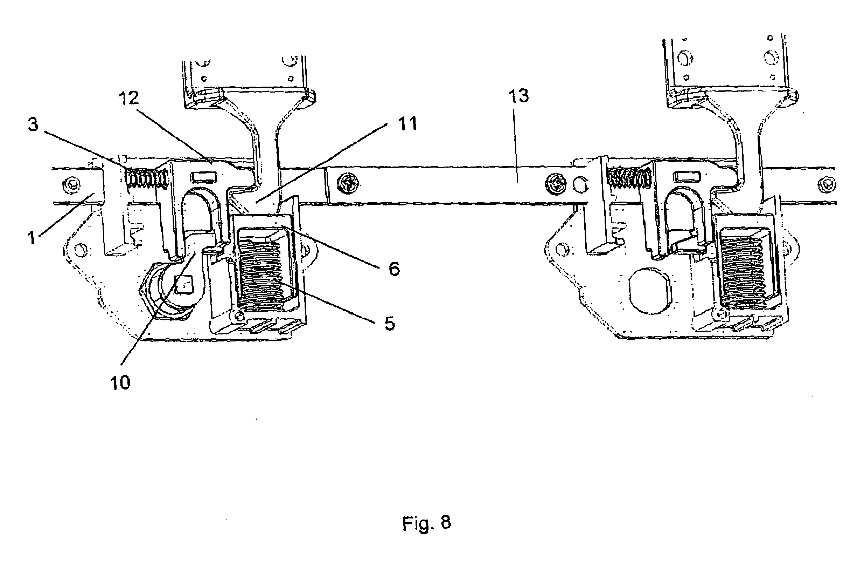

Figure 6 shows the inner portion of the cover 8 is described above. Figure 7 shows a component drawing of all the components of the locking system. Figure 8 shows a cutting of a locking system with more the two hooks/brackets. The left one is the driven one, driven by the cylinder lock 9 which is coupled with the cam 10 driving the slider with its appendix 12 to release the locking system. The slider of the right one in the figure 8 is driven by the metal sliding rod 1 to release the hook of the locking device on the right hand.

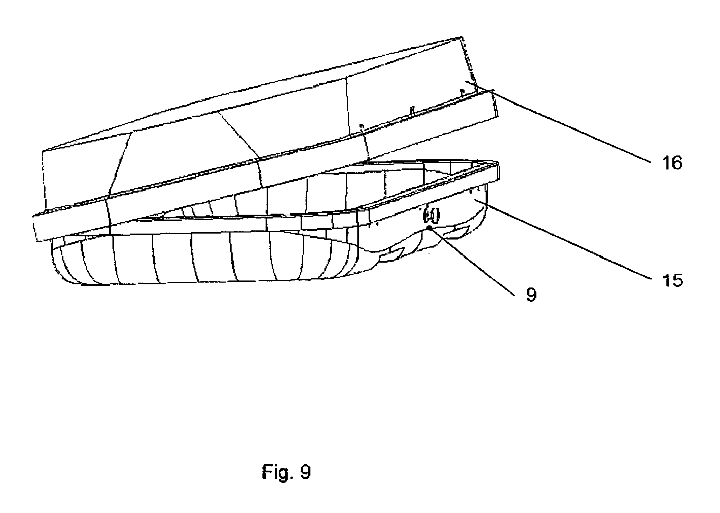

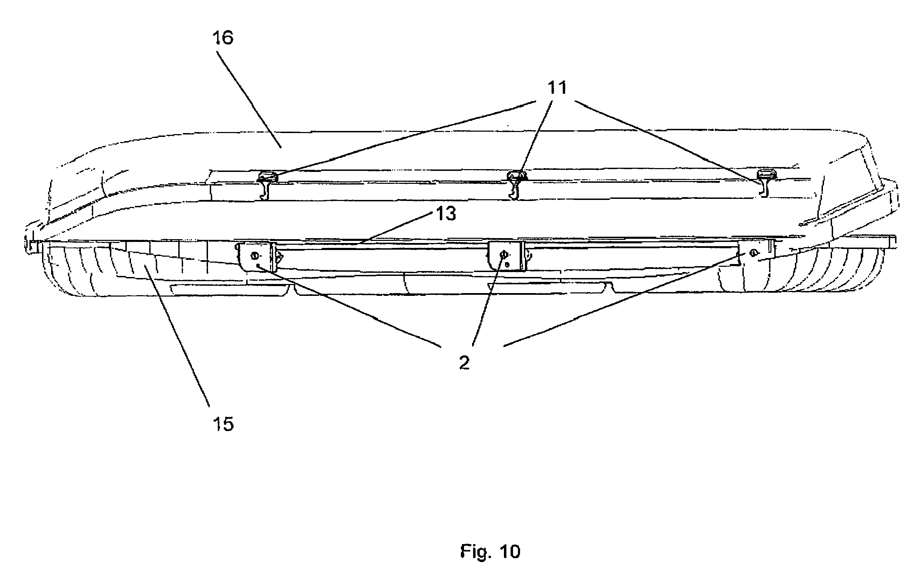

Figures 9 and 10 show a vehicle roof box with the locking system as described above built up out of three hooks and brackets, the central one driven by the cylinder lock 9. The vehicle roof box comprises a bottom part 15 carrying the brackets 2 and an upper lid 16 with the hooks 11. The sliding rod driving the sliders are interconnected by connecting bars as shown in figure 10. Inserting different types of connecting bars 13 allows the system to be adapted to different types and lengths of vehicle roof boxes or the like.

### Reference numbers:

- 1: rod
- 2: bracket
- 3: horizontal spring pushing the slider
- 4: pin carrying the spring 3
- 5: vertical spring pushing the hook
- 6: pin
- 7: protrusion
- 8: cover of the bracket
- 9: cylinder lock
- 10: cam
- 11: hook
- 12: appendix
- 13: connecting bars
- 14: screw hole
- 15: bottom part of the vehicle roof box
- 16: lid part of the vehicle roof box
- 17: recess for the guiding of the rod
- 18: recess for the guiding of the rod
- 19: stopper
- 20: stopper
- 21: key

## Claims

1. Locking system for cases, in particular for vehicle roof boxes or the like, the case having a bottom part (15) and a hinged lid part (16), with one or more hooks (11) mounted on one part that can be engaged by movable closing means (12) mounted on the opposite part of the case, **characterized in that** there is at least one automatic releasing mechanism pushing against one or more hooks (11) towards the opening direction and lifting the hinged lid part (16) from the bottom part (15).

2. Locking system according to claim 1, **characterized in that** the releasing mechanism comprises at least one spring (5) pushing one hook (11) towards the opening direction, each hook (11) pushed by one spring (5) towards the opening direction respectively.

3. Locking system according to claim 1 or 2, **characterized in that** the movable closing means (12) engaging the hooks (11) are driven by one sliding rod (1), the sliding rod (1) actuated over a cam (10) by a central cylinder lock (9) with key (21).

4. Locking system according to one of the preceding claims, **characterized in that** there is at least one protrusion (7) holding the closing means (12) and/or a sliding rod (1) carrying the closing means (12) in the opened position as long as the hooks (11) are released.

5. Locking system according to one of the preceding claims, **characterized in that** the hooks (11) are mounted on the hinged lid part (16) whereas the movable closing means (12) are mounted on the bottom part (15).

6. Locking system according to one of the preceding claims, **characterized in that** the system comprises a mechanism automatically moving the closing means (12) in the closing position engaging with the hooks (11), when the hooks (11) are moved in the closing position.

7. Locking system according to claim 6, **characterized in that** the mechanism automatically moving the closing means (12) in the closing position engaging with the hooks (11) comprises at least one helical spring (3) pushing a sliding rod (1) which comprises the closing means (12).

8. Vehicle roof box comprising a locking system according to one of the preceding claims.
